# EUROPEAN PATENT APPLICATION

(11) **EP 4 635 687 A1**
(43) Date of publication of application: **22.10.2025**
(21) Application number: 23925242.2
(22) Date of filing: 28.02.2023
(51) Int. Cl.: B25J 9/18

(54) **ROBOT CONTROL SYSTEM, ROBOT CONTROL METHOD, AND ROBOT CONTROL PROGRAM**

(71) Applicant: Kabushiki Kaisha Yaskawa Denki, Kitakyushu-shi, Fukuoka 806-0004 (JP)
(72) Inventor: KITTAKA, Tatsuya, Kitakyushu-shi, Fukuoka 806-0004 (JP); MURAOKA, Jiro, Kitakyushu-shi, Fukuoka 806-0004 (JP); ADACHI, Masaru, Kitakyushu-shi, Fukuoka 806-0004 (JP)
(74) Representative: Grünecker Patent- und Rechtsanwälte PartG mbB
(86) International application number: PCT/JP2023/007408
(87) International publication number: WO 2024/180685

(57) **Abstract**

A robot control system includes a storage unit configured to store a behavior tree comprising a plurality of subtrees corresponding to a plurality of tasks and a parallel node that is a parent node connected to the plurality of subtrees, and resource information including a status of a common resource to be used for the plurality of tasks; a tree management unit configured to, in respective cycles, call each of the plurality of subtrees in order with respect to the parallel node, based on the behavior tree; and a task control unit configured to execute the task corresponding to the called subtree. The common resource includes a robot. The status includes at least an in-use state and a usable state. The task control unit is configured, for each of the plurality of subtrees, to: refer to the resource information in response to the subtree being called; and in a case where the status of the common resource to be used for the task corresponding to the subtree is the usable state, execute the task using the common resource.

## Description

### Technical Field

One aspect of the present disclosure relates to a robot control system, a robot control method, and a robot control program.

### Background Art

Patent Literature 1 describes a method for controlling a robot, the method including use of a behavior tree architecture for tasks performed by the robot.

### Citation List

### Patent Literature

[Patent Document 1] Japanese Patent No. 6943364

### Summary of Invention

### Technical Problem

It is desired to efficiently execute a plurality of tasks.

### Solution to Problem

A robot control system according to an aspect of the present disclosure includes: a storage unit configured to store a behavior tree comprising a plurality of subtrees corresponding to a plurality of tasks and a parallel node that is a parent node connected to the plurality of subtrees, and resource information including a status of a common resource to be used for the plurality of tasks, wherein the common resource includes a robot, and wherein the status includes at least an in-use state and a usable state; a tree management unit configured to, in respective cycles, call each of the plurality of subtrees in order with respect to the parallel node, based on the behavior tree; and a task control unit configured to execute the task corresponding to the called subtree, wherein the task control unit is configured, for each of the plurality of subtrees, to: refer to the resource information in response to the subtree being called; and in a case where the status of the common resource to be used for the task corresponding to the subtree is the usable state, execute the task using the common resource.

### Advantageous Effects of Invention

According to an aspect of the present disclosure, a plurality of tasks can be executed efficiently.

### Brief Description of Drawings

FIG. 1 is a diagram showing an example application of a robot control system.
FIG. 2 is a diagram showing an example hardware configuration of a computer used for the robot control system.
FIG. 3 is a diagram showing an example behavior tree.
FIG. 4 is a state transition diagram showing an example of changes in the status of a common resource.
FIG. 5 is a diagram showing an example release batch.
FIG. 6 is a flowchart showing an example of processing executed by the robot control system.
FIG. 7 is a flowchart showing an example of processing related to a parallel node.
FIG. 8 is a diagram showing an example of changing the order in which subtrees are called.

### Description of Embodiments

Hereinafter, various examples of the present disclosure will be described in detail with reference to the accompanying drawings. In the description of the drawings, an identical or equivalent element will be denoted by an identical reference sign, and redundant description will be omitted.

### [Overview of system]

A robot control system according to an example is a computer system for causing an agent to execute, in a real work space, a plurality of tasks using a common resource including a robot. The task refers to a process executed to achieve a certain purpose. The agent refers to a subject that executes the task. The agent may be a robot or any other type of device or machine. In the robot control system, the robot may be managed as at least one of the agent and the common resource. The common resource refers to a resource (e.g., a hardware resource) that may be used for a plurality of tasks. Examples of the common resource other than the robot include various sensors such as a camera, and a transfer device such as a conveyor. The robot control system manages at least one common resource.

Executing the plurality of tasks using the common resource corresponds to concurrent processing, parallel processing, or a combination thereof. The fact that a certain task uses the common resource means that the common resource is occupied by that task. In such processing, phenomena such as deadlock and resource starvation are considered. The deadlock refers to a phenomenon in which two or more processes (in the present disclosure, the tasks) each requests a resource held by another task, so that none of the processes is able to proceed. The resource starvation refers to a phenomenon in which a certain process (task) is unable to acquire a resource and therefore is not executed. In general, a design for executing a plurality of tasks concurrently or in parallel while avoiding these problems is not easy.

To process a plurality of tasks concurrently or in parallel while avoiding or reducing the deadlock and the resource starvation, the robot control system manages the plurality of tasks and the common resource using a behavior tree. As a result, the plurality of tasks may be executed efficiently. Moreover, by introducing the behavior tree, a mechanism may be designed and managed readily that flexibly operates an agent in response to changes in the environment of a real working space.

The behavior tree refers to a method for representing motions of the agent with a tree structure. The behavior tree includes a root node, control nodes, and execution nodes. Any node is connected to another node by a directed edge. A node located at the start point of the directed edge is referred to as a "parent node", and a node located at the end point of the directed edge is referred to as a "child node". Each node has at most one parent node and zero or more child nodes. The root node is located at the top of the behavior tree. The root node has no parent node, and typically has a single child node. The control node has one parent node and one or more child nodes. In response to being called, the control node calls its child nodes in a defined order. The execution node has one parent node and no child node. The execution node is also called "leaf". Each of the plurality of tasks is associated with an execution node.

In the disclosure, in a case of focusing on a particular node, a set of one child node of that particular node and zero or more nodes located in a lower layer of that child node is also referred to as a "subtree". Each subtree corresponds to a task. Since the subtrees may be defined at each level of the behavior tree, the relationship between the subtrees may be said to be a nested structure. Corresponding to such a structure, a certain task may be realized by a set of a plurality of subtasks.

The root node calls the child nodes at a predetermined cycle interval. This call is also referred to as a "tick". Generally, the cycle interval is a quite short time, and may be set based on a frame rate of a video captured by a camera 4, for example. In response to a call by the root node, each node in the subtree connected to the root node is called in a predetermined order with priority from the left based on the tree structure. The call (tick) propagates from the root node to the individual execution nodes, thereby executing the entire behavior tree. Each node returns any one of True indicating that the execution has succeeded, False indicating that the execution has failed, and Running indicating that the execution is in progress, as a result of execution.

### [Configuration of system]

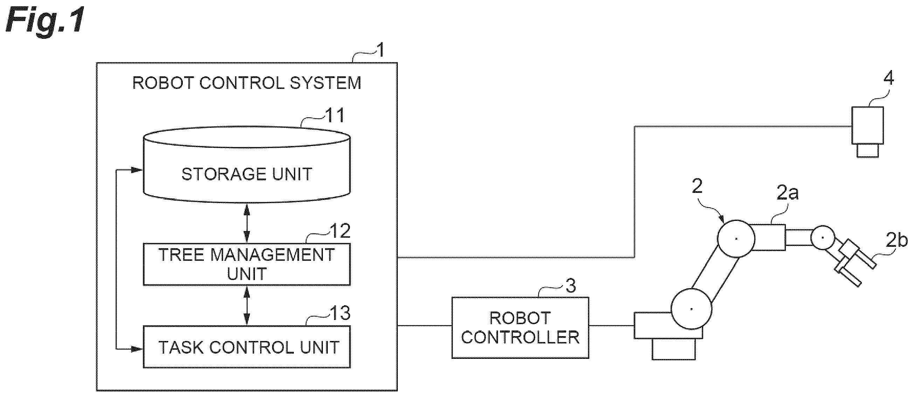

FIG. 1 is a diagram showing an example application of the robot control system 1. In this example, as an example of the agent, the robot 2 placed in a real working space is shown. The robot control system 1 is connected to a robot controller 3, and the robot controller 3 is connected to the robot 2. The working space is provided with a camera 4 that captures the environment including the robot 2. The camera 4 is connected to the robot control system 1. Each communication network connecting these devices may be a wired network or a wireless network. The communication network may include at least one of the Internet and an intranet. Alternatively, the communication network may be implemented simply by a single communication cable.

In this example, the robot control system 1 causes the robot 2 to execute a plurality of tasks by using a common resource that includes the robot 2 and the camera 4. The robot control system 1 executes a predetermined computation to generate a command signal for controlling the robot 2. In one example, the command signal includes data for controlling the robot 2, for example, a path indicating a trajectory of the robot 2. The trajectory of the robot 2 refers to a path of movement of the robot 2 or a component thereof. For example, the trajectory of the robot 2 may be a trajectory of the tip portion. The robot control system 1 transmits the generated command signal to the robot controller 3.

The robot controller 3 is a device that operates the robot 2 in accordance with the command signal from the robot control system 1. In one example, the robot controller 3 calculates a joint angle target value for aligning the position and posture of the tip portion of the robot 2 with a target value indicated by the command signal, and controls the robot 2 according to the joint angle target value. The joint angle target value is an angle target value for each joint of the robot 2.

The robot 2 operates based on the control by the robot control system 1 to execute a plurality of tasks. At least one task is set to process a workpiece. The workpiece refers to a tangible object processed by the robot 2. In one example, the robot 2 is a multi-axis, serial-link, vertical articulated robot. The robot 2 includes a manipulator 2a and an end effector 2b, which is a tool attached to a tip of the manipulator 2a. The robot 2 may execute various processes using the end effector 2b. The robot 2 may freely change the position and posture of the end effector 2b within a predetermined range. The robot 2 may be a six-axis vertical articulated robot or a seven-axis vertical articulated robot in which one redundant axis is added to the six axes.

The camera 4 is an imaging device that captures the working space, for example, capturing an area around the robot 2. In the example of FIG. 1, the camera 4 is provided at a location different from the robot 2, but the camera 4 may be mounted on the manipulator 2a, for example, attached near a tip portion of the manipulator 2a.

FIG. 1 also shows an example functional configuration of the robot control system 1. In one example, the robot control system 1 includes, as functional components, a storage unit 11, a tree management unit 12, and a task control unit 13.

The storage unit 11 is a functional module configured to store a behavior tree representing operations of the robot 2 and resource information including a status of a common resource. The status of the common resource is information indicating a current condition of the common resource, for example, a relationship between the common resource and the tasks. The storage unit 11 may further store history information relating to execution of at least one task. The history information indicates, for at least two consecutive cycles, a usage status of the common resource by each of a plurality of tasks. In one example, the history information corresponds to each control node (for example, each parallel node). For instance, history information associated with a certain parallel node indicates, for each of the plurality of tasks corresponding to a plurality of subtrees connected to that parallel node, whether the task has used the common resource or whether the task has released the common resource.

The tree management unit 12 is a functional module configured to, in each cycle, call each node in sequence from the root node based on the behavior tree. Focusing on the root node or a certain control node, the tree management unit 12 calls each of one or more subtrees connected to that node in order.

The task control unit 13 is a functional module configured to control execution of the tasks corresponding to a called subtree, based on the status of the common resource, in response to the subtree being called.

The robot control system 1 may be implemented by any type of computer. The computer may be a general-purpose computer such as a personal computer or a business server, or may be a dedicated device configured to execute specific processing.

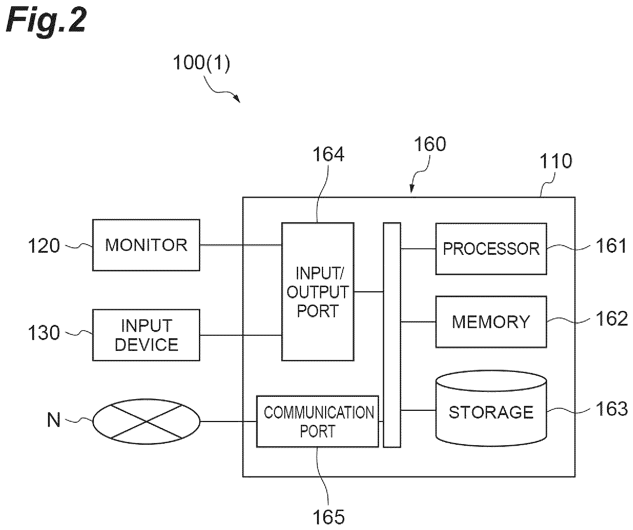

FIG. 2 is a diagram showing an example hardware configuration of a computer 100 used for the robot control system 1. In this example, the computer 100 includes a main body 110, a monitor 120, and an input device 130.

The main body 110 is a device having circuitry 160. The circuitry 160 comprises a processor 161, a memory 162, a storage 163, an input/output port 164, and a communication port 165. The number of each hardware component may be one, or two or more. The storage 163 stores a program that configures each functional module of the main body 110. The storage 163 is a computer-readable recording medium such as a hard disk, a nonvolatile semiconductor memory, a magnetic disk, or an optical disc. The memory 162 temporarily stores a program loaded from the storage 163, calculation results of the processor 161, and the like. The processor 161, in cooperation with the memory 162, executes the program to constitute each functional module. The input/output port 164, in response to commands from the processor 161, performs input and output of electrical signals with the monitor 120 or the input device 130. The input/output port 164 may input and output electrical signals to and from other devices such as the robot controller 3 and the camera 4. The communication port 165, in accordance with commands from the processor 161, performs data communication with other devices via a communication network N.

The monitor 120 is a device for displaying information output from the main body 110. For example, the monitor 120 is a device capable of displaying graphics, such as a liquid crystal panel.

The input device 130 is a device for inputting information to the main body 110. Examples of the input device 130 include operation interfaces such as a keypad, a mouse, and an operation controller.

The monitor 120 and the input device 130 may be integrated as a touch panel. For example, the main body 110, the monitor 120, and the input device 130 may be integrated like a tablet computer.

Each functional module of the robot control system 1 is implemented by loading a robot control program into the processor 161 or the memory 162 and causing the processor 161 to execute that program. The robot control program contains codes for implementing each functional module of the robot control system 1. In accordance with the robot control program, the processor 161 operates the input/output port 164 and the communication port 165, and reads and writes data in the memory 162 or the storage 163.

The robot control program may be provided after being recorded on a non-transitory recording medium such as a CD-ROM, a DVD-ROM, or a semiconductor memory. Alternatively, the robot control program may be provided via a communication network as data signals superimposed on carrier waves.

### [Behavior tree]

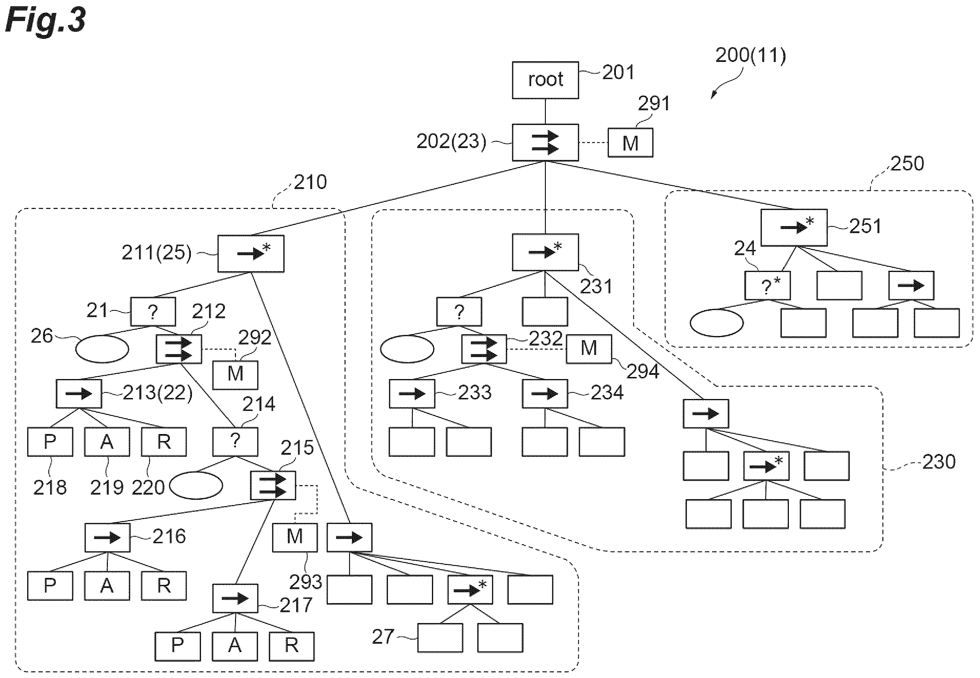

Referring to FIG. 3, the behavior tree will be described. FIG. 3 is a diagram showing a behavior tree 200 stored in the storage unit 11.

FIG. 3 shows, as types of the control node, a fallback node 21, a sequence node 22, a parallel node 23, a fallback node with memory 24, and a sequence node with memory 25.

The fallback node 21 is used in a case where success of any one of a plurality of child nodes is sufficient. The fallback node 21 calls two or more child nodes in order from left to right. In response to any child node returning True or Running, the fallback node 21 returns that return value to its parent node as an execution result of the fallback node 21, and does not call the remaining child nodes. In response to all child nodes returning False, the fallback node 21 returns False to the parent node as an execution result of the fallback node 21.

The sequence node 22 is used in a case where success of all child nodes is required. The sequence node 22 calls two or more child nodes in order from left to right. In response to any child node returning False or Running, the sequence node 22 returns that value to its parent node as an execution result of the sequence node 22, and does not call the remaining child nodes. In response to all child nodes returning True, the sequence node 22 returns True to the parent node as an execution result of the sequence node 22.

The parallel node 23 is used in a case where all child nodes are to be executed, and is substantially used to run those child nodes concurrently or in parallel. The parallel node 23 calls two or more child nodes in order from left to right. The parallel node 23 returns True to its parent node in response to all child nodes returning True, returns False to the parent node in response to at least one child node returning False, and otherwise returns Running to the parent node.

The fallback node with memory 24 is an extension of the fallback node 21. The fallback node with memory 24 differs from the fallback node 21 in that, if an execution result in the previous cycle was Running, fallback node with memory 24 calls child nodes starting from the child node that has been last called in that cycle.

The sequence node with memory 25 is an extension of the sequence node 22. The sequence node with memory 25 differs from the sequence node 22 in that, if an execution result in the previous cycle was Running, sequence node with memory 25 calls child nodes starting from the child node that has been last called in that cycle.

FIG. 3 shows, as types of the execution nodes, a condition node 26 and an action node 27.

The condition node 26 is used to check whether a predetermined condition is met. The condition node 26 executes a function corresponding to that condition. The condition node 26 returns to its parent node either True, indicating that the condition is met, or False, indicating that the condition is not met.

The action node 27 is used to perform a task. The action node 27 executes a function corresponding to the task. The action node 27 returns to its parent node one of: True, indicating that the task has succeeded; False, indicating that the task has failed; or Running, indicating that the task is in any other state (e.g., in progress).

The robot control system 1 manages the concurrent processing and the parallel processing by using at least one parallel node. The following description focuses on the parallel node.

In the behavior tree 200, a root node 201 has a parallel node 202 as a single child. The parallel node 202 has three sequence nodes with memory 211, 231, and 251, as its child nodes. The parallel node 202 connects to a subtree 210 rooted at the sequence node with memory 211, a subtree 230 rooted at the sequence node with memory 231, and a subtree 250 rooted at the sequence node with memory 251.

The subtree 210 includes a parallel node 212 located two levels below the sequence node with memory 211. The parallel node 212 connects to a subtree rooted at a sequence node 213 and a subtree rooted at a fallback node 214. A parallel node 215 located one level below the fallback node 214 is connected to a subtree rooted at a sequence node 216 and a subtree rooted at a sequence node 217.

The subtree 230 includes a parallel node 232 located two levels below the sequence node with memory 231. The parallel node 232 is connected to a subtree rooted at a sequence node 233 and a subtree rooted at a sequence node 234.

The behavior tree 200 includes four parallel nodes 202, 212, 215, and 232. The parallel node 202 is an uppermost parallel node located at an uppermost level, among those parallel nodes. The parallel nodes 212, 215, and 232 are lower parallel nodes located at lower levels than the uppermost level of the uppermost parallel node.

In one example, at least one of a plurality of subtrees connected to a parallel node includes an occupation node, which is an action node requesting the parallel node to change the status of the common resource to an in-use state, and an execution node, which is an action node that uses the common resource. The tree management unit 12 calls the occupation node and the execution node in this order in that subtree. At least one of a plurality of subtrees connected to a parallel node may further include, in addition to the occupation node and the execution node, a release node, which is an action node requesting the parallel node to revert the status of the common resource to a usable state. The tree management unit 12 calls the occupation node, the execution node, and the release node in this order in that subtree. In FIG. 3, the occupation node, the execution node, and the release node are denoted as "P," "A," and "R," respectively. For example, a subtree connected to the parallel node 212 and rooted at the sequence node 213 has an occupation node 218, an execution node 219, and a release node 220.

In one example, the occupation node, the execution node, and the release node return values to their parent node as follows. The occupation node returns True if the common resource is in the usable state, and Running otherwise. The execution node returns True if the task that uses the common resource succeeds, False if the task fails, and Running if the task is in any other state (e.g., in progress). The release node returns True if the common resource is able to be released, and Running otherwise. By arranging those nodes in the order of occupation node, execution node, and release node, it is controlled whether to execute the task using the common resource or to wait until the common resource becomes available.

In one example, the storage unit 11 stores the resource information in association with at least one parallel node. For instance, the storage unit 11 may store the resource information in association with the uppermost parallel node. Alternatively, the storage unit 11 may store the resource information in association with each of the uppermost parallel node and the lower parallel node. In FIG. 3, the resource information is denoted as "M." In the behavior tree 200, the storage unit 11 stores the resource information in association with each of the parallel nodes 202, 212, 215, and 232. In this example, the parallel nodes 202, 212, 215, and 232 correspond to resource information 291, 292, 293, and 294, respectively.

In one example, the resource information associated with a certain parallel node indicates a status of the common resource that may be used for a plurality of tasks corresponding to a plurality of subtrees connected to that parallel node. The resource information 293 indicates the status of the common resource that may be used in lower layers beneath the parallel node 215. The resource information 292 indicates the status of the common resource that may be used in lower layers beneath the parallel node 212. Since the parallel node 215 is included in one of the subtrees connected to the parallel node 212, the resource information 292 includes the resource information 293. The resource information 294 indicates the status of the common resource that may be used in lower layers beneath the parallel node 232. Since the parallel nodes 212 and 215 are included in the subtree 210 and the parallel node 232 is included in the subtree 230, the resource information 291 includes the resource information 292-294. Therefore, the resource information associated with the uppermost parallel node may indicate the statuses of all common resources that may be used under the management by the behavior tree.

The resource information may be associated with a control node other than the parallel node. For example, the resource information may be associated with at least one of the fallback node 21, the sequence node 22, the fallback node with memory 24, and the sequence node with memory 25. The resource information may be associated with each control node of the behavior tree 200.

### [Status of common resource]

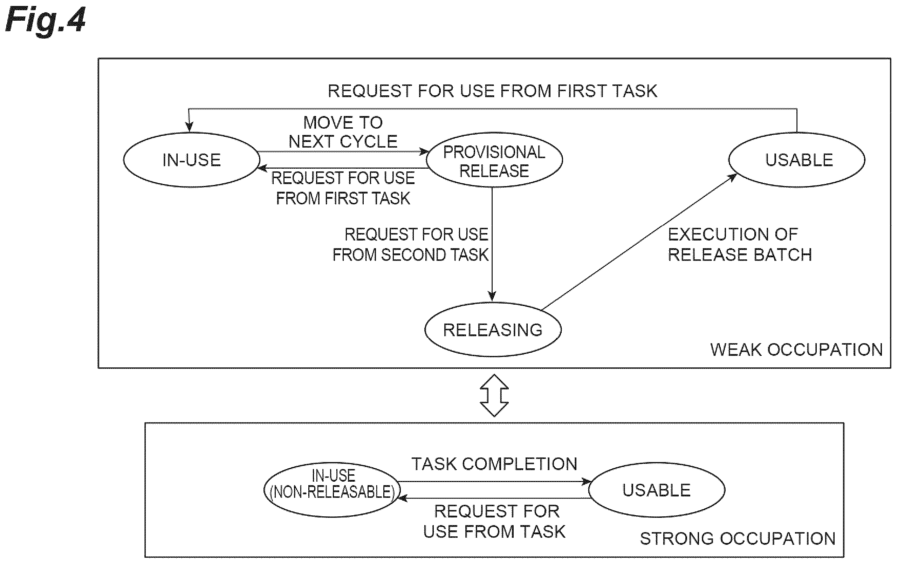

FIG. 4 is a state transition diagram showing an example of changes in the status of the common resource. This example shows two patterns of state transition: weak occupation and strong occupation. In one example, the tree management unit 12 dynamically sets a state transition of the common resource based on a strength of occupation associated with an execution node (i.e., a task) that requests use of the common resource. Accordingly, while a plurality of tasks are being executed based on the behavior tree, there may exist a common resource whose pattern of state transitions changes between the weak occupation and the strong occupation.

In a case where the state transition of the common resource is the weak occupation, the tree management unit 12 changes the status of the common resource among a usable state, an in-use state, a provisional release state, and a releasing state. That is, under the weak occupation, the statuses include the usable state, the in-use state, the provisional release state, and the releasing state. The usable state indicates that the common resource is not currently used for any task, and any task may begin using the common resource. The in-use state indicates that the common resource is being used for a particular task and is therefore unavailable to the other tasks. The provisional release state is a state defined to avoid deadlock of the common resource. The releasing state is a state defined to cause the common resource to be released from the task occupying that common resource.

In a case where the status of the common resource is the usable state and a first task requests use of the common resource, the tree management unit 12 updates the status to the in-use state in response to that request. The task control unit 13 then causes the agent (robot 2) to execute the first task. In a case where the status of the common resource is the in-use state, any other task including the second task is unable to use the common resource, and thus the task control unit 13 does not cause the agent to execute the second task.

In a case of proceeding to the next cycle, i.e., in a case where the tree management unit 12 again calls the root node, the tree management unit 12 updates the status of the common resource from the in-use state to the provisional release state in response to that transition. As a result, any task including the first task and the second task may become able to use the common resource.

In a case where the first task requests use of the provisionally released common resource, the tree management unit 12 updates the status to the in-use state in response to that request. As a result, the first task is able to continue to use the common resource.

On the other hand, in a case where the second task requests use of the provisionally released common resource, the tree management unit 12 updates the status to the releasing state in response to that request. As a result, the second task may obtain the opportunity to use the common resource.

In a case where the status of the common resource is updated to the releasing state, the task control unit 13 causes the agent (robot 2) to execute a release batch for releasing the common resource. In the behavior tree, the release batch is associated with the subtree corresponding to the first task, in advance. In a case where the common resource is robot 2, the release batch may, for example, cause the robot currently gripping a workpiece to place that workpiece at a predetermined location. In response to completion of the release batch, the tree management unit 12 updates the status to the usable state. As a result, any task may use the common resource.

As described above, under the weak occupation, the common resource that is being used for a certain task (the first task) may be grabbed by another task (the second task) by the provisional release and the release batch.

In a case where the state transition of the common resource is strong occupation, the tree management unit 12 changes the status of the common resource between the usable state and the in-use state. That is, in the strong occupation, the status includes the usable state and the in-use state. The definition of the usable state is the same as that of the weak occupation. The in-use state is the same as the weak occupation in that the common resource is in use by a certain task and the other tasks are unable to use the common resource, but is different from the weak occupation in that the common resource is not provisionally released and is not released. That is, in the strong occupation, the common resource being used for a certain task is not pre-empted by another task.

In a case where the status of the common resource is the usable state and a certain task requests use of the common resource, the tree management unit 12 updates the status to the in-use state in response to that request. The task control unit 13 then causes the agent (robot 2) to execute that task. In a case where the status of the common resource is the in-use state, another task is unable to use that common resource, and thus the task control unit 13 does not cause the agent to execute the other task.

In a case where the task that has used the common resource completes, the tree management unit 12 updates the status to the usable state in response to that completion. As a result, any task may use the common resource.

### [Release batch]

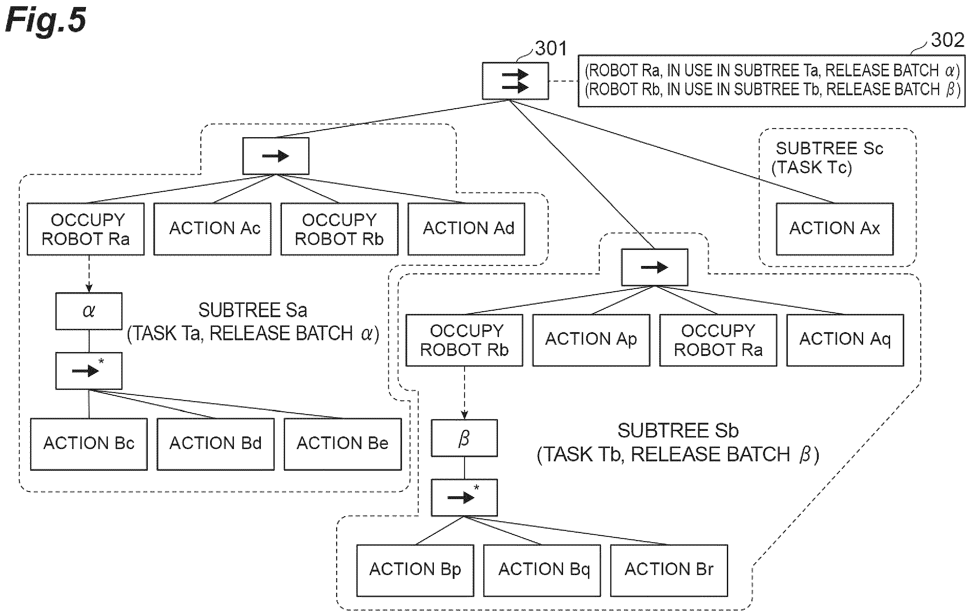

FIG. 5 shows an example release batch. This figure shows a subtree rooted at a parallel node 301 as part of a behavior tree. The parallel node 301 is connected to three subtrees Sa, Sb, and Sc. In this example, each of robots Ra and Rb is managed as both an agent and a common resource. The subtree Sa corresponds to a task Ta including an action Ac by the robot Ra and an action Ad by the robot Rb. The subtree Sa also corresponds to a release batch α for releasing the robot Ra that is being used to execute the task Ta. The subtree Sb corresponds to a task Tb including an action Ap by the robot Rb and an action Aq by the robot Ra. The subtree Sb also corresponds to a release batch β for releasing the robot Rb that is being used to execute the task Tb. The subtree Sc corresponds to a task Tc including an action Ax. The subtree Sc does not include a release batch.

In a case where the status of the robot Ra is updated to the releasing state, the task control unit 13 causes the robot Ra to execute the release batch α. The robot Ra executes actions Bc, Bd, and Be that constitute the release batch α, in that order. In response to completion of the release batch α, the tree management unit 12 updates the status of the robot Ra to the usable state. As a result, the task Tb may be able to use the robot Ra.

In a case where the status of the robot Rb is updated to a releasing state, the task control unit 13 causes the robot Rb to execute the release batch β. The robot Rb executes the actions Bp, Bq, and Br that constitute the release batch β, in that order. In response to completion of the release batch β, tree management unit 12 updates the status of the robot Rb to the usable state. As a result, the task Ta may be able to use the robot Rb.

The resource information 302 indicates the status of each of the robots Ra and Rb, which are the common resources. In a case where the status of the common resource is the in-use state, the resource information 302 further identifies a release batch for releasing that resource.

### [Robot control method]

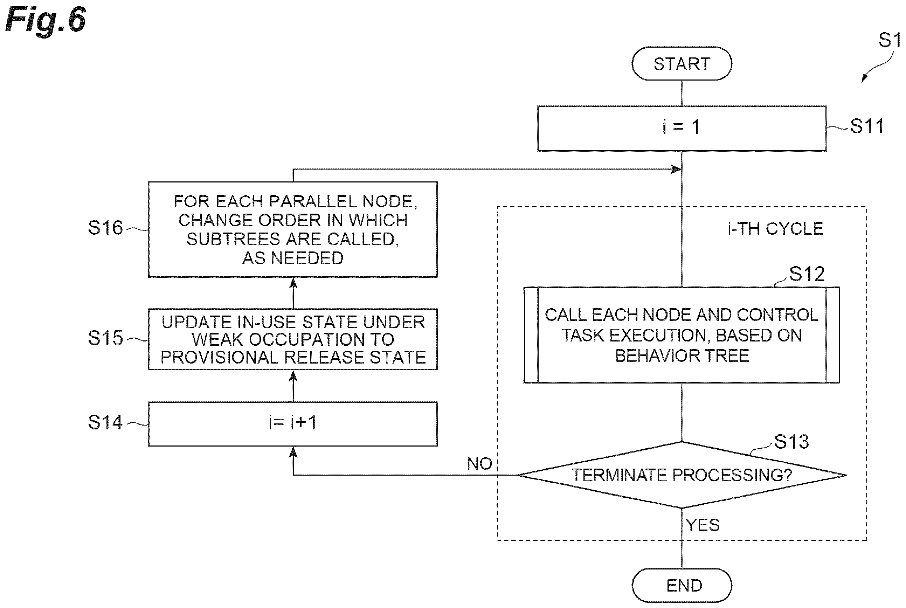

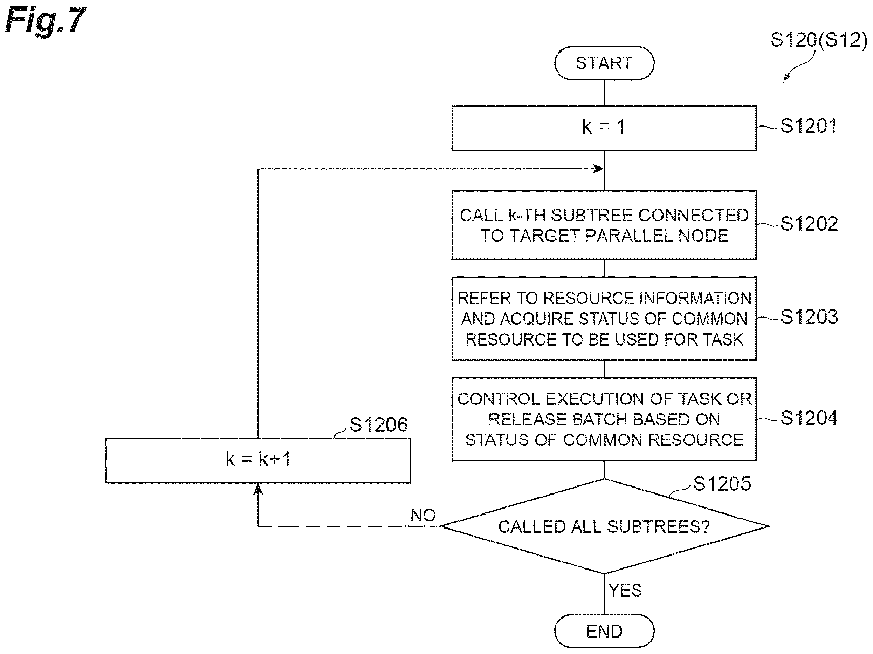

As an example of the robot control method according to the present disclosure, the following describes processing executed by the robot control system 1 with reference to Figs. 6 and 7. FIG. 6 is a flowchart showing an example of that processing as processing flow S1. That is, the robot control system 1 executes the processing flow S1. FIG. 7 is a flowchart showing an example of the processing related to the parallel node, which forms part of the processing flow S1. In the examples of Figs. 6 and 7, the agent is assumed to be the robot 2.

As described above, in individual cycles, the tree management unit 12 calls each node of the behavior tree in sequence. FIG. 6 represents these cycles by a variable i. In step S11, the tree management unit 12 initializes the variable i to 1.

In step S12, as the process in the i-th cycle, the robot control system 1 calls each node and controls task execution, based on the behavior tree. The tree management unit 12 calls each node in order from the root node based on the behavior tree stored in the storage unit 11. In a case where a called node corresponds to a task, the task control unit 13 refers to the resource information stored in the storage unit 11 and, in cooperation with the tree management unit 12, controls execution of the task based on the status of the common resource.

With reference to FIG. 7, a process associated with a certain parallel node will be described as processing flow S120. In this description, that parallel node is referred to as a target parallel node for convenience. The processing flow S120 is part of step S12 and is executed for each of one or more parallel nodes in the behavior tree. As described above, the parallel node is connected to a plurality of subtrees corresponding to a plurality of tasks. FIG. 7 distinguishes individual subtrees by using a variable k.

In steps S1201 and S1202, the tree management unit 12 calls a first subtree connected to the target parallel node. The first subtree is a subtree located at the leftmost position one level beneath the target parallel node.

In step S1203, the task control unit 13 refers to the resource information in response to the subtree being called, and acquires the status of the common resource to be used for the task corresponding to that subtree. In one example, the task control unit 13 refers to the resource information associated with any parallel node in the behavior tree. For example, the task control unit 13 may refer to the resource information associated with the target parallel node. In a case where the target parallel node is a lower parallel node, the task control unit 13 may refer to the resource information associated with the uppermost parallel node. Alternatively, the task control unit 13 may refer to both the resource information associated with the uppermost parallel node and the resource information associated with the target parallel node (lower parallel node). Alternatively, in addition to the resource information of each of these two parallel nodes, the task control unit 13 may further refer to the resource information associated with another control node (for example, another parallel node) located on a path from the target parallel node to the uppermost parallel node. In a case where the task control unit 13 refers to the resource information for two or more control nodes including the uppermost parallel node and the target parallel node (lower parallel node), the task control unit 13 acquires a plurality of statuses from the resource information of those nodes.

In step S1204, the task control unit 13 cooperates with the tree management unit 12 to control execution of the task based on the status of the common resource. Alternatively, the task control unit 13 controls execution of the release batch based on the status of the common resource. In relation to those controls, the tree management unit 12 updates that status as needed.

### (Case of usable state)

In a case where the status is the usable state, the task control unit 13 causes the robot 2 (agent) to execute the task using the common resource. In a case where a plurality of statuses have been acquired, the task control unit 13 may cause the robot 2 to execute the task in response to each status being the usable state.

In response to the task being executed, the tree management unit 12 updates the status to the in-use state. In a case where a plurality of statuses are acquired, the tree management unit 12 updates each of those statuses to the in-use state. In this case, in the resource information associated with each of at least two control nodes including the uppermost parallel node and a lower parallel node, the status of the common resource is updated to the in-use state. Thus, in a case where the task control unit 13 causes the robot 2 to execute a task (the first task), the tree management unit 12 stores, in the storage unit 11, the resource information indicating that that task (the first task) is using the common resource and that another task (the second task) is unable to use the common resource. The tree management unit 12 also stores, in the storage unit 11, the history information indicating that the task has used the common resource in the i-th cycle.

The task control unit 13 generates a path for executing the task by path planning, and outputs a command signal indicating that path to the robot controller 3. The robot controller 3 controls the robot 2 in accordance with the command signal. The robot 2 operates along that path to execute the task.

### (Case of in-use state)

In a case where the status is the in-use state, the task control unit 13 does not cause the robot 2 to execute the task. That is, the task control unit 13 does not generate and output the command signal. In a case where a plurality of statuses are acquired, the task control unit 13 does not cause the robot 2 to execute the task in response to at least one of the statuses being the in-use state. The tree management unit 12 stores, in the storage unit 11, the history information indicating that the task does not use the common resource in the i-th cycle.

### (Case of provisional release state)

In a case where the status is the provisional release state, the task control unit 13 executes the processing in accordance with the task corresponding to the called subtree. That task is either the first task that has used the common resource prior to the provisional release or the second task that has been unable to use the common resource prior to provisional release.

In a case where the first task requests use of the common resource, the task control unit 13 causes the robot 2 (agent) to execute the first task using the common resource. In a case where a plurality of statuses is acquired, the task control unit 13 may cause the robot 2 to execute the first task, in response to each status being the provisional release state.

In response to execution of the first task, the tree management unit 12 updates the status to the in-use state. In a case where a plurality of statuses are acquired, the tree management unit 12 updates each acquired status to the in-use state. In this case, in the resource information of each of two or more control nodes including at least the uppermost parallel node and the lower parallel node, the status of the common resource is updated to the in-use state. In this manner, in a case where the task control unit 13 causes the robot 2 to execute the first task, the tree management unit 12 stores, in the storage unit 11, the resource information indicating that the first task is using the common resource and that another task (the second task) is unable to use the common resource. That is, the tree management unit 12 updates the status of the common resource to the in-use state such that the first task is able to continue using the common resource. Further, the tree management unit 12 stores, in the storage unit 11, the history information indicating that the first task has used the common resource in the i-th cycle.

The task control unit 13 generates a path for executing the first task by path planning, and outputs a command signal indicating that path to robot controller 3. The robot controller 3 controls the robot 2 in accordance with the command signal. As a result, robot 2 operates along the path to execute the first task.

In a case where the second task requests use of the common resource, the tree management unit 12 updates the status of the common resource to the releasing state. In a case where a plurality of statuses are acquired, the tree management unit 12 updates each acquired status to the releasing state. In this case, in the resource information associated with each of two or more control nodes including at least the uppermost parallel node and the lower parallel node, the status of the common resource is updated to the releasing state.

The task control unit 13 does not cause the robot 2 to execute the first task and the second task. That is, the task control unit 13 does not generate and output a command signal. The tree management unit 12 stores, in the storage unit 11, the history information indicating that the first task is scheduled to release the common resource in the i-th cycle.

### (Releasing state)

In a case where the status is the releasing state, the task control unit 13 executes processing in response to the task corresponding to the called subtree being the first task that has used the common resource before the provisional release. The task control unit 13 causes the robot 2 (agent) to execute a release batch for releasing the common resource that has been used in the first cycle. In a case where a plurality of statuses are acquired, the task control unit 13 may cause the robot 2 to execute the release batch in response to each acquired status being the releasing state.

On the other hand, in a case where the task corresponding to the called subtree is a task other than the first task, the task control unit 13 does not cause the robot 2 to execute that other task. That is, the task control unit 13 does not generate and output a command signal. The tree management unit 12 stores, in the storage unit 11, the history information indicating that the other task does not use the common resource in the i-th cycle.

In a case where the release batch is to be executed, the tree management unit 12 updates the status to the usable state. In a case where a plurality of statuses are acquired, the tree management unit 12 updates each status to the usable state. In this case, in the resource information of each of two or more control nodes including at least the uppermost parallel node and the lower parallel node, the status of the common resource is updated to the usable state. The tree management unit 12 further stores, in the storage unit 11, the history information indicating that the first task has released the common resource in the i-th cycle.

The task control unit 13 generates a path for executing the release batch by path planning, and outputs a command signal indicating that path to the robot controller 3. The robot controller 3 controls the robot 2 according to the command signal. The robot 2 operates along the path to execute the release batch.

In step S1205, the tree management unit 12 determines whether all subtrees connected to the target parallel node have been called. In a case where all such subtrees have been called (YES in step S1205), the tree management unit 12 terminates the processing for the target parallel node, and executes processing for the next node based on the behavior tree. In a case where there remains an uncalled subtree (NO in step S1205), the process proceeds to step S1206, where the tree management unit 12 selects the (k+1)-th subtree, i.e., the next subtree. The process then returns to step S1202, where the tree management unit 12 calls that subtree. The robot control system 1 then executes step S1203 and the subsequent step for that subtree.

Returning to FIG. 6, in step S13 the tree management unit 12 determines whether to terminate the overall processing managed by the behavior tree. For example, the tree management unit 12 may terminate the processing in response to all tasks that were to be executed having finished, or in response to the operation-end time of the robot 2 as an agent having arrived (YES in step S13). In a case of not terminating the processing (NO in step S13), the process proceeds to step S14. In step S14, the tree management unit 12 increments the variable i indicating the cycle by one.

In step S15, the tree management unit 12 updates the in-use state under the weak occupation to the provisional release state. The tree management unit 12 accesses the storage unit 11 and refers to the resource information associated with each of at least one control node of the behavior tree. Then, for each piece of resource information, the tree management unit 12 changes the status of the common resource that is in the in-use state under the weak occupation to the provisional release state.

In step S16, the tree management unit 12 changes, for each parallel node, the order in which the subtrees are called as needed. For each parallel node, the tree management unit 12 changes the order in which the plurality of subtrees connecting to the parallel node are called, based on the history information associated with the parallel node. For example, in a case where the task corresponding to the subtree located first with respect to the parallel node has not used the common resource for at least two consecutive cycles, the tree management unit 12 may move that subtree to a second or later position. Alternatively, in a case where the task corresponding to the subtree located first with respect to the parallel node has released, in a next (second cycle), the common resource that the task had used in a certain cycle (first cycle), the tree management unit 12 may move that subtree to a second or later position.

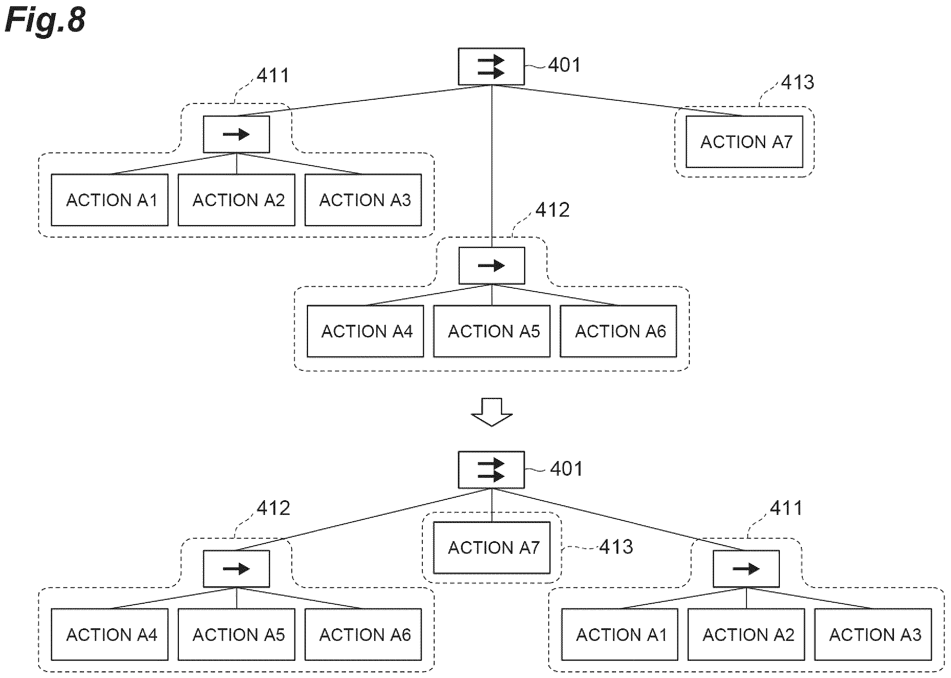

With reference to FIG. 8, the change in the order of calling subtrees will be described. FIG. 8 is a diagram showing an example of the change. In this example, a parallel node 401 is connected to subtrees 411, 412, and 413. The subtree 411 corresponds to a task realized by a combination of actions A1, A2, and A3. The subtree 412 corresponds to a task realized by a combination of actions A4, A5, and A6. The subtree 413 corresponds to a task realized by an action A7.

It is assumed that, in a certain cycle, the subtrees 411, 412, 413 are arranged in this order. That is, the subtree 411 is the first subtree, the subtree 412 is the second subtree, and the subtree 413 is the last subtree. In the example of FIG. 8, the tree management unit 12 moves the subtree located first to the last position. As a result, in a case where the tree management unit 12 calls the parallel node 401 next, the tree management unit 12 calls the subtrees 412, 413, and 411 in this order. The tree management unit 12 may move the subtree located first between any other two subtrees, for example, may move the subtree 411 between the subtrees 412 and 413.

Returning to FIG. 6, the process backs to step S12 after step S16. In repeated step S12, the robot control system 1 again calls each node based on the behavior tree and controls the task execution, as processing in the next cycle. Then, in step S13, the tree management unit 12 again determines whether to terminate the overall processing.

As described above with reference to FIGS. 6 and 7, in respective cycles, the tree management unit 12 calls each of the plurality of subtrees in order from the target parallel node based on the behavior tree. The task control unit 13 causes the task corresponding to the called subtree to be executed. For each of the plurality of subtree, the task control unit 13 refers to the resource information when the subtree is called. In a case where the status of the common resource to be used for the task corresponding to the subtree is the usable state, the task control unit 13 causes the robot 2 (agent) to execute that task using the common resource. The tree management unit 12 updates the status of the common resource indicated by the resource information from the in-use state to the provisional release state, and after that update, calls the plurality of subtrees with respect to the parallel node.

### [Modifications]

Various examples of the present disclosure have been described in detail above. However, the technical matters of the present disclosure are not limited to those examples. Various modifications may be made without departing from the gist of the present disclosure.

The hardware configuration of the system is not limited to an arrangement in which each functional module is realized by executing a program. For example, at least part of the above-described functional modules may be implemented by logic circuitry dedicated to the function, or may be configured as an ASIC (Application Specific Integrated Circuit) in which that logic circuitry is integrated.

The procedure of the method executed by at least one processor is not limited to the above examples. For example, some of the steps or processes described above may be omitted, or the steps may be carried out in a different order. In addition, any two or more of the above steps may be combined, or some steps may be modified or deleted. Alternatively, another step may be executed in addition to the above-mentioned steps.

In a case of comparing a magnitude relationship between two numerical values in a computer system or a computer, either criterion of "greater than or equal to" and "greater than" may be used, and either criterion of "less than or equal to" and "less than" may be used.

### [Appendix]

As may be understood from the various examples described above, the present disclosure includes the following aspects.
(Appendix 1) A robot control system comprising:
   a storage unit configured to store a behavior tree comprising a plurality of subtrees corresponding to a plurality of tasks and a parallel node that is a parent node connected to the plurality of subtrees, and resource information including a status of a common resource to be used for the plurality of tasks, wherein the common resource includes a robot, and wherein the status includes at least an in-use state and a usable state;
   a tree management unit configured to, in respective cycles, call each of the plurality of subtrees in order with respect to the parallel node, based on the behavior tree; and
   a task control unit configured to execute the task corresponding to the called subtree,
   wherein the task control unit is configured, for each of the plurality of subtrees, to:
      refer to the resource information in response to the subtree being called; and
      in a case where the status of the common resource to be used for the task corresponding to the subtree is the usable state, execute the task using the common resource.
(Appendix 2) The robot control system according to appendix 1,
   wherein the storage unit is configured to store the resource information in association with the parallel node, and
   wherein the task control unit is configured, for each of the plurality of subtrees, to refer to the resource information associated with the parallel node in response to the subtree being called.
(Appendix 3) The robot control system according to appendix 2,
   wherein the behavior tree includes, as a plurality of the parallel nodes, an uppermost parallel node located at an uppermost level among the plurality of parallel nodes and a lower parallel node located at a lower level than the uppermost level,
   wherein the storage unit is configured to store the resource information in association with the uppermost parallel node, and
   wherein the task control unit is configured, for each of the plurality of subtrees connected to the lower parallel node, to refer to the resource information associated with the uppermost parallel node in response to the subtree being called.
(Appendix 4) The robot control system according to appendix 3,
   wherein the storage unit is configured to store the resource information in association with each of at least the uppermost parallel node and the lower parallel node, and
   wherein the task control unit is configured, for each of the plurality of subtrees connected to the lower parallel node, to:
      refer to both the resource information associated with the uppermost parallel node and the resource information associated with the lower parallel node in response to the subtree being called; and
      in a case where the status of the common resource to be used for the task corresponding to the subtree is in the usable state in at least both the resource information associated with the uppermost parallel node and the resource information associated with the lower parallel node, execute the task.
(Appendix 5) The robot control system according to any one of appendices 1 to 4, wherein, in a case where the task control unit causes the task to be executed, the tree management unit is configured to store, in the storage unit, the resource information indicating that the task is using the common resource and another task is unable to use the common resource.
(Appendix 6) The robot control system according to appendix 5,
   wherein the respective cycles include a first cycle and a second cycle following the first cycle, and
   wherein the plurality of tasks include a first task and a second task, and
   wherein the tree management unit is configured to, in the first cycle, store the resource information indicating that the first task is using the common resource and the second task is unable to use the common resource, and
   wherein, the tree management unit is configured to, in a case of proceeding to the second cycle:
      update the status of the common resource indicated by the stored resource information to a provisional release state that avoids deadlock of the common resource; and
      call the plurality of subtrees with respect to the parallel node after updating the resource information.
(Appendix 7) The robot control system according to appendix 6, wherein, in a case where the status of the common resource is the provisional release state in the second cycle, the tree management unit is configured to:
   update the status of the common resource to the in-use state such that the first task is able to continue using the common resource, in a case where the first task requests use of the common resource; and
   update the status of the common resource to a releasing state that allows the common resource to be released from the first task, in a case where the second task requests use of the common resource.
(Appendix 8) The robot control system according to appendix 7,
   wherein the subtree corresponding to the first task further corresponds to a release batch for releasing the common resource that has been used in the first cycle, and
   wherein the task control unit is configured to cause the release batch to be executed in a case where the status of the common resource is updated to the releasing state.
(Appendix 9) The robot control system according to any one of appendices 5 to 8,
   wherein at least one of the plurality of subtrees includes an occupation node that requests the parallel node to change the status of the common resource to the in-use state and an execution node that uses the common resource, and
   wherein the tree management unit is configured to call the occupation node and the execution node in this order, in the call of the at least one of the plurality of subtrees.
(Appendix 10) The robot control system according to appendix 9,
   wherein the at least one of the plurality of subtrees further includes a release node that requests the parallel node to revert the status of the common resource to the usable state, and
   wherein the tree management unit is configured to call the occupation node, the execution node, and the release node in this order, in the call of the at least one of the plurality of subtrees.
(Appendix 11) The robot control system according to any one of appendices 1 to 10,
   wherein the storage unit is configured to further store history information regarding execution of at least one of the plurality of tasks, and
   wherein the tree management unit is configured to change an order of calling the plurality of subtrees based on the history information.
(Appendix 12) The robot control system according to appendix 11, wherein, in a case where the task corresponding to a first subtree under the parallel node has not used the common resource for at least two consecutive cycles, the tree management unit is configured to move the first subtree to a second or subsequent position.
(Appendix 13) The robot control system according to appendix 11 or 12,
   wherein the respective cycles include a first cycle and a second cycle following the first cycle, and
   wherein, in a case where the task corresponding to a first subtree under the parallel node releases, in the second cycle, the common resource that the task has used in the first cycle, the tree management unit is configured to move the first subtree to a second or subsequent position.
(Appendix 14) A robot control method executable by a robot control system including at least one processor, the method comprising:
   storing, in a storage unit, a behavior tree comprising a plurality of subtrees corresponding to a plurality of tasks and a parallel node that is a parent node connected to the plurality of subtrees, and resource information including a status of a common resource to be used for the plurality of tasks, wherein the common resource includes a robot, and wherein the status includes at least an in-use state and a usable state;
   in respective cycles, calling each of the plurality of subtrees in order with respect to the parallel node, based on the behavior tree; and
   executing the task corresponding to the called subtree,
   wherein the executing the task by the robot includes, for each of the plurality of subtrees:
      referring to the resource information in response to the subtree being called; and
      in a case where the status of the common resource to be used for the task corresponding to the subtree is the usable state, executing the task using the common resource.
(Appendix 15) A robot control program for causing a computer to execute:
   storing, in a storage unit, a behavior tree comprising a plurality of subtrees corresponding to a plurality of tasks and a parallel node that is a parent node connected to the plurality of subtrees, and resource information including a status of a common resource to be used for the plurality of tasks, wherein the common resource includes a robot, and wherein the status includes at least an in-use state and a usable state;
   in respective cycles, calling each of the plurality of subtrees in order with respect to the parallel node, based on the behavior tree; and
   executing the task corresponding to the called subtree,
   wherein the executing the task by the robot includes, for each of the plurality of subtrees:
      referring to the resource information in response to the subtree being called; and
      in a case where the status of the common resource to be used for the task corresponding to the subtree is the usable state, executing the task using the common resource.

According to Appendices 1, 14, and 15, the behavior tree indicating the plurality of tasks that use the common resource and the status of that common resource are managed integrally, and each task is executed based on that status. This mechanism enables the plurality of tasks to be executed efficiently.

According to Appendix 2, since the resource information is associated with the parallel node, the correspondence between the common resource and the plurality of tasks becomes clearer. As a result, a process of referring to the status of the common resource corresponding to a task may be implemented more readily.

According to Appendix 3, since the resource information is associated with the uppermost parallel node, one or more common resources that may be used may be collectively managed.

According to Appendix 4, since the resource information is associated with at least both the uppermost parallel node and the lower parallel node, even if the behavior tree becomes large-scale or complex, the status of the common resource may be managed more readily.

According to Appendix 5, in a case where the task is executed using the common resource, the resource information is stored such that the task occupies the common resource. By managing the resource information in this manner, the occupation of the common resource by a task may be controlled more reliably.

According to Appendix 6, in a case of proceeding to the next cycle, the status of the common resource that has been occupied by the first task is updated to the provisional release state. As a result, not only the first task but also the second task (i.e., another task) is given an opportunity to use the common resource. This mechanism enables a plurality of tasks to be executed efficiently as a whole.

According to Appendix 7, the status of the common resource is updated in accordance with a task that has requested to use that common resource. This mechanism enables a plurality of tasks to be executed efficiently as a whole, according to the circumstances under which the tasks are called.

According to Appendix 8, in a case where a task other than the first task that has been using the common resource attempts to use that common resource, the common resource is released by executing the release batch. This mechanism allows another task to use the common resource more reliably.

According to Appendix 9, since both the request for and the use of the common resource are explicitly represented by the occupation node and the execution node in the behavior tree, the common resource may be designed or managed more readily.

According to Appendix 10, since the release of the common resource is explicitly represented by the release node in the behavior tree, the common resource may be designed or managed more readily.

According to Appendix 11, since the order of calling the subtrees is changed based on the history of task execution, resource starvation may be resolved or suppressed more reliably.

According to Appendix 12, since the subtree corresponding to a task that has not used the common resource is moved down in the order, another task becomes able to request use of the common resource first. This mechanism enables a plurality of tasks to be executed more efficiently.

According to Appendix 13, since the subtree corresponding to a task that has released the common resource is moved down in the order, another task becomes able to request use of the common resource first. This mechanism enables a plurality of tasks to be executed more efficiently.

### Reference Signs List

1 ... robot control system, 2 ... robot, 3 ... robot controller, 4 ... camera, 11 ... storage unit, 12 ... tree management unit, 13 ... task control unit, 200 ... behavior tree.

## Claims

1. A robot control system comprising:
a storage unit configured to store a behavior tree comprising a plurality of subtrees corresponding to a plurality of tasks and a parallel node that is a parent node connected to the plurality of subtrees, and resource information including a status of a common resource to be used for the plurality of tasks, wherein the common resource includes a robot, and wherein the status includes at least an in-use state and a usable state;
a tree management unit configured to, in respective cycles, call each of the plurality of subtrees in order with respect to the parallel node, based on the behavior tree; and
a task control unit configured to execute the task corresponding to the called subtree,
wherein the task control unit is configured, for each of the plurality of subtrees, to:
refer to the resource information in response to the subtree being called; and
in a case where the status of the common resource to be used for the task corresponding to the subtree is the usable state, execute the task using the common resource.

2. The robot control system according to claim 1,
wherein the storage unit is configured to store the resource information in association with the parallel node, and
wherein the task control unit is configured, for each of the plurality of subtrees, to refer to the resource information associated with the parallel node in response to the subtree being called.

3. The robot control system according to claim 2,
wherein the behavior tree includes, as a plurality of the parallel nodes, an uppermost parallel node located at an uppermost level among the plurality of parallel nodes and a lower parallel node located at a lower level than the uppermost level,
wherein the storage unit is configured to store the resource information in association with the uppermost parallel node, and
wherein the task control unit is configured, for each of the plurality of subtrees connected to the lower parallel node, to refer to the resource information associated with the uppermost parallel node in response to the subtree being called.

4. The robot control system according to claim 3,
wherein the storage unit is configured to store the resource information in association with each of at least the uppermost parallel node and the lower parallel node, and
wherein the task control unit is configured, for each of the plurality of subtrees connected to the lower parallel node, to:
refer to both the resource information associated with the uppermost parallel node and the resource information associated with the lower parallel node in response to the subtree being called; and
in a case where the status of the common resource to be used for the task corresponding to the subtree is in the usable state in at least both the resource information associated with the uppermost parallel node and the resource information associated with the lower parallel node, execute the task.

5. The robot control system according to any one of claims 1 to 4, wherein, in a case where the task control unit causes the task to be executed, the tree management unit is configured to store, in the storage unit, the resource information indicating that the task is using the common resource and another task is unable to use the common resource.

6. The robot control system according to claim 5,
wherein the respective cycles include a first cycle and a second cycle following the first cycle, and
wherein the plurality of tasks include a first task and a second task, and
wherein the tree management unit is configured to, in the first cycle, store the resource information indicating that the first task is using the common resource and the second task is unable to use the common resource, and
wherein, the tree management unit is configured to, in a case of proceeding to the second cycle:
update the status of the common resource indicated by the stored resource information to a provisional release state that avoids deadlock of the common resource; and
call the plurality of subtrees with respect to the parallel node after updating the resource information.

7. The robot control system according to claim 6, wherein, in a case where the status of the common resource is the provisional release state in the second cycle, the tree management unit is configured to:
update the status of the common resource to the in-use state such that the first task is able to continue using the common resource, in a case where the first task requests use of the common resource; and
update the status of the common resource to a releasing state that allows the common resource to be released from the first task, in a case where the second task requests use of the common resource.

8. The robot control system according to claim 7,
wherein the subtree corresponding to the first task further corresponds to a release batch for releasing the common resource that has been used in the first cycle, and
wherein the task control unit is configured to cause the release batch to be executed in a case where the status of the common resource is updated to the releasing state.

9. The robot control system according to claim 5,
wherein at least one of the plurality of subtrees includes an occupation node that requests the parallel node to change the status of the common resource to the in-use state and an execution node that uses the common resource, and
wherein the tree management unit is configured to call the occupation node and the execution node in this order, in the call of the at least one of the plurality of subtrees.

10. The robot control system according to claim 9,
wherein the at least one of the plurality of subtrees further includes a release node that requests the parallel node to revert the status of the common resource to the usable state, and
wherein the tree management unit is configured to call the occupation node, the execution node, and the release node in this order, in the call of the at least one of the plurality of subtrees.

11. The robot control system according to any one of claims 1 to 4,
wherein the storage unit is configured to further store history information regarding execution of at least one of the plurality of tasks, and
wherein the tree management unit is configured to change an order of calling the plurality of subtrees based on the history information.

12. The robot control system according to claim 11, wherein, in a case where the task corresponding to a first subtree under the parallel node has not used the common resource for at least two consecutive cycles, the tree management unit is configured to move the first subtree to a second or subsequent position.

13. The robot control system according to claim 11,
wherein the respective cycles include a first cycle and a second cycle following the first cycle, and
wherein, in a case where the task corresponding to a first subtree under the parallel node releases, in the second cycle, the common resource that the task has used in the first cycle, the tree management unit is configured to move the first subtree to a second or subsequent position.

14. A robot control method executable by a robot control system including at least one processor, the method comprising:
storing, in a storage unit, a behavior tree comprising a plurality of subtrees corresponding to a plurality of tasks and a parallel node that is a parent node connected to the plurality of subtrees, and resource information including a status of a common resource to be used for the plurality of tasks, wherein the common resource includes a robot, and wherein the status includes at least an in-use state and a usable state;
in respective cycles, calling each of the plurality of subtrees in order with respect to the parallel node, based on the behavior tree; and
executing the task corresponding to the called subtree,
wherein the executing the task by the robot includes, for each of the plurality of subtrees:
referring to the resource information in response to the subtree being called; and
in a case where the status of the common resource to be used for the task corresponding to the subtree is the usable state, executing the task using the common resource.

15. A robot control program for causing a computer to execute:
storing, in a storage unit, a behavior tree comprising a plurality of subtrees corresponding to a plurality of tasks and a parallel node that is a parent node connected to the plurality of subtrees, and resource information including a status of a common resource to be used for the plurality of tasks, wherein the common resource includes a robot, and wherein the status includes at least an in-use state and a usable state;
in respective cycles, calling each of the plurality of subtrees in order with respect to the parallel node, based on the behavior tree; and
executing the task corresponding to the called subtree,
wherein the executing the task by the robot includes, for each of the plurality of subtrees:
referring to the resource information in response to the subtree being called; and
in a case where the status of the common resource to be used for the task corresponding to the subtree is the usable state, executing the task using the common resource.
